# EUROPEAN PATENT APPLICATION

(11) **EP 2 227 008 A1**
(43) Date of publication of application: **08.09.2010**
(21) Application number: 09156751.1
(22) Date of filing: 30.03.2009
(51) Int. Cl.: H04N 5/445, G06F 3/048

(54) **Electronic program guide content displaying method**

(30) Priority: 06.03.2009 KR 20090019313
(71) Applicant: Samsung Electronics Co., Ltd., Suwon-si, Gyeonggi-do 442-742 (KR)
(72) Inventor: Lee, Dong-heon, Seoul (KR); Szilagyi, Vitor, London N7 9JN (GB); Kwon, Yong-hwan, Seongnam-si, Gyeonggi-do (KR); Kim, Joon-hwan, Yongin-si, Gyeonggi-do (KR); Kwon, Heui-jin, Gyeonggi-do (KR); Lee, Chang-soo, Seoul (KR); Lee, Jeong-yeon, Seongnam-si, Gyeonggi-do (KR)
(74) Representative: Clark, David James

(57) **Abstract**

Provided are a method and apparatus for displaying electronic program guide (EPG) content for a plurality of channels, wherein the method may include: displaying (S801) a main window, wherein the main window includes detailed information for a predetermined program; receiving (S802) a user input; and displaying (S803) a foreground window over at least a portion of the main window, wherein the foreground window includes a first list including program information for a current program on a predetermined channel and future programs on the predetermined channel and a second list including channel information for other channels in the plurality of channels.

## Description

### BACKGROUND OF THE INVENTION

### Field of the Invention

Methods and apparatuses consistent with the present invention relate to a content displaying, and more particularly, to displaying electronic program guide (EPG) content.

### Description of the Related Art

Generally, displaying EPG information on a display device includes providing information about current and future programs provided by a content provider. However, displaying EPG information for multiple channels having multiple programs can be complicated and existing EPG display methods often employ cumbersome interfaces. Consequently, there is a need for an improved, more user-friendly interface for providing EPG content.

### SUMMARY OF THE INVENTION

Exemplary embodiments of the present invention aim to overcome the above disadvantages and other disadvantages not described above. Also, the present invention is not required to overcome the disadvantages described above, and an exemplary embodiment of the present invention may not overcome any of the problems described above.

Aspects of the present invention provide a method for displaying EPG content for a plurality of channels.

According to an exemplary embodiment of the present invention, there is provided a method of displaying electronic program guide (EPG) content for a plurality of channels, the method may include: displaying a main window, wherein the main window includes detailed information for a predetermined program; receiving a user input; and displaying a foreground window over at least a portion of the main window, wherein the foreground window includes a first list including program information for a current program on a predetermined channel and future programs on the predetermined channel and a second list including channel information for other channels in the plurality of channels.

Suitably, the EPG content may include a plurality of channel identifiers for each channel in the plurality of channels.

Suitably, the foreground window may include a first channel identifier, which corresponds to the predetermined channel, and wherein the channel information for the other channels in the second list includes channel identifiers for each of the other channels in the plurality of channels.

Suitably, the main window may further include a channel identifier, from the plurality of channel identifiers, for a channel which is broadcasting the predetermined program.

Suitably, the user input may include one of a selection of the channel identifier in the main window, a selection of an action area displayed on a portion of the main window and a command received from a remote control.

Suitably, the predetermined program may be broadcast on the predetermined channel.

Suitably, the method may further include: selecting a second channel identifier from the other channels in the second list, wherein the second channel identifier corresponds to a desired channel; scrolling the second list so that the selected second channel identifier moves to a position occupied by the first channel identifier; and updating the first list to include updated program information for programs on the desired channel.

Suitably, the method may further include: selecting a new program from the updated first list; scrolling the updated first list so that the selected new program becomes the current program; and updating the detailed information displayed in the main window so that the updated detailed information corresponds to the selected new program.

Suitably, the method may further include: terminating the displaying of the foreground window after the updating of the detailed information displayed in the main window.

Suitably, the method may further include: selecting a portion of the main window other than the at least one portion where the foreground window is displayed; and terminating the displaying of the foreground window.

Suitably, the method may further include: selecting a future program of the future programs displayed in the first list; and scrolling the first list so that the selected future program becomes the current program; updating the program information in the first list; displaying updated detailed information about the selected future program in the foreground window.

Suitably, the first and second lists may be scrollable.

Suitably, at least one of the first list and the second list may be translucent.

Suitably, the detailed information for the predetermined program may be visible if the first list is displayed.

Suitably, the first list may include unit cells for each of the future programs, and the unit cells are equal in size.

Suitably, the second list may include unit cells for each of the other channels in the plurality of channels, and the unit cells are equal in size.

Suitably, each cell may include time information for the respective future programs.

Suitably, if the program information for one of the future programs is unavailable, the respective unit cell may display an indicator which shows an unavailable status.

Suitably, the method may further include: selecting one of playing, pausing and recording of the current program on the predetermined channel; performing the one of the playing, pausing and recording the current program; and displaying an indicator which indicates the selected one of the playing, pausing and recording of the current program.

Suitably, the method may further include: selecting to perform recording of a future program on the predetermined channel; performing the recording of the future program; and displaying an indicator which indicates the recording of the future program.

Additionally, it should be noted that the above-noted exemplary embodiments and other aspects of the present invention are not limited to software implementation, but can also be implemented through various hardware apparatuses and systems.

### BRIEF DESCRIPTION OF THE DRAWINGS

The present invention will become apparent and more readily appreciated from the following description of the exemplary embodiments, taken in conjunction with the accompanying drawings of which:
FIG. 1 illustrates a main window according to an exemplary embodiment of the present invention;
FIG. 2A illustrates selecting a channel identifier on the main window according to an exemplary embodiment of the present invention;
FIG. 2B illustrates displaying of a foreground window over at least a portion of the main window according to an exemplary embodiment of the present invention;
FIG. 3A illustrates selecting a future program from a predetermined channel in the foreground window according to an exemplary embodiment of the present invention;
FIG. 3B illustrates displaying an updated main window according to an exemplary embodiment of the present invention;
FIG. 4A illustrates scrolling the future programs in the foreground window according to an exemplary embodiment of the present invention;
FIG. 4B illustrates displaying of a return to current time icon according to an exemplary embodiment of the present invention;
FIG. 4C illustrates selecting the return to current time icon according to an exemplary embodiment of the present invention;
FIG. 4D illustrates returning the foreground window to a closest time slot according to an exemplary embodiment of the present invention;
FIG. 5A illustrates scrolling the foreground window to an end of a broadcast schedule for the predetermined channel according to an exemplary embodiment of the present invention;
FIG. 5B illustrates displaying an unavailable status for time slots where the predetermined channel is not broadcasting according to an exemplary embodiment of the present invention;
FIG. 6A illustrates selecting the channel identifier from the main window according to an exemplary embodiment of the present invention;
FIG. 6B illustrates selecting a new channel identifier from the foreground window according to an exemplary embodiment of the present invention;
FIG. 6C illustrates updating the foreground window according to an exemplary embodiment of the present invention;
FIG. 7A illustrates selecting a new show from the future programs in the foreground window according to an exemplary embodiment of the present invention;
FIG. 7B illustrates scrolling the future programs in the foreground window according to an exemplary embodiment of the present invention;
FIG. 7C illustrates updating the foreground window according to an exemplary embodiment of the present invention;
FIG. 8 illustrates a flowchart according to an exemplary embodiment of the present invention.

### DETAILED DESCRIPTION OF THE EXEMPLARY EMBODIMENTS

Hereinafter, exemplary embodiments of the present invention will be described with reference to accompanying drawings, wherein like numerals refer to like elements and repetitive descriptions will be avoided as necessary.

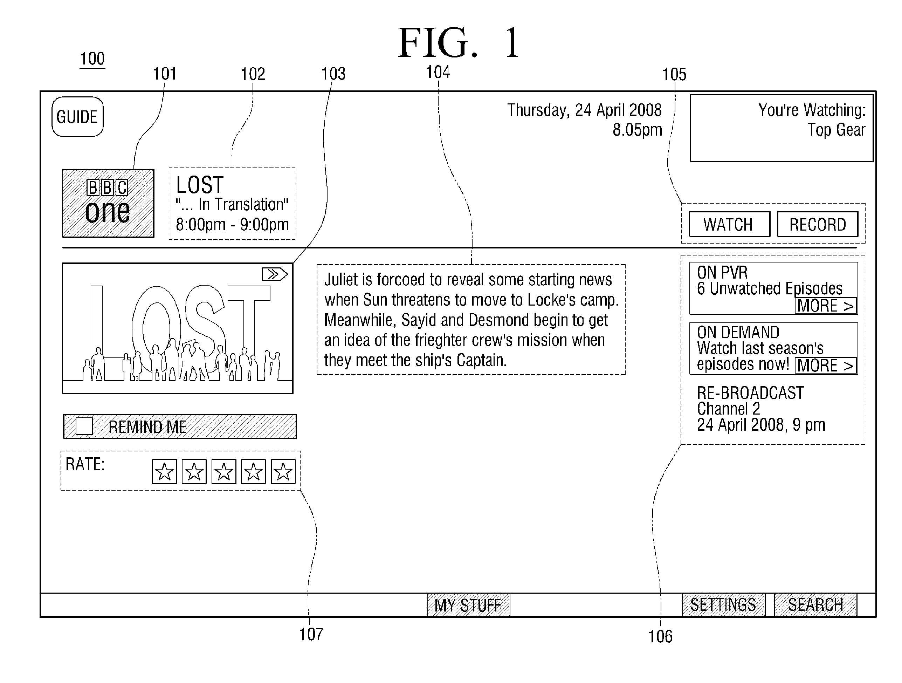

FIG. 1 illustrates a main window for displaying EPG content according to an exemplary embodiment of the present invention. As shown therein, a main window 100 may include many different components. For example, the main window 100 may include a channel identifier 101 or logo, summary information 102 such as program title, episode title, and time slot information for a predetermined program, an image or graphic 103 and detailed information 104 for the predetermined program.

In addition, the main window 100 may include other components such as a control buttons 105 for watching/recording/playback, etc., and/or other informational elements 106 such as previously recorded episodes, on demand offerings, and rebroadcast schedules for the predetermined program. The main window 100 may further include rating indicator 107 which allows a user to rate the predetermined program. Of course, the design of the main window 100 does not necessarily have to conform strictly to the example shown in FIG. 1.

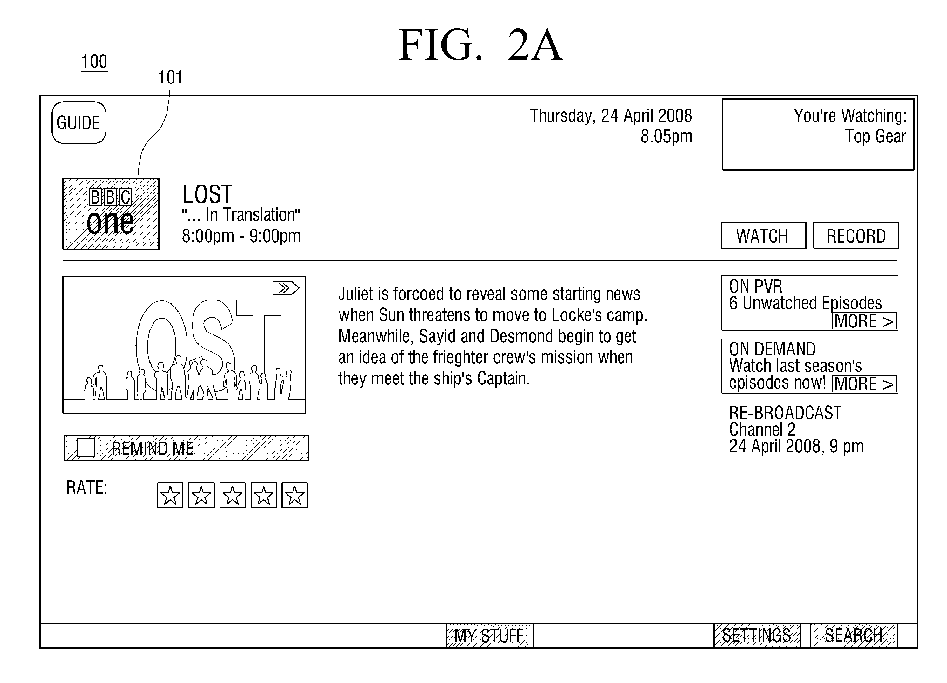

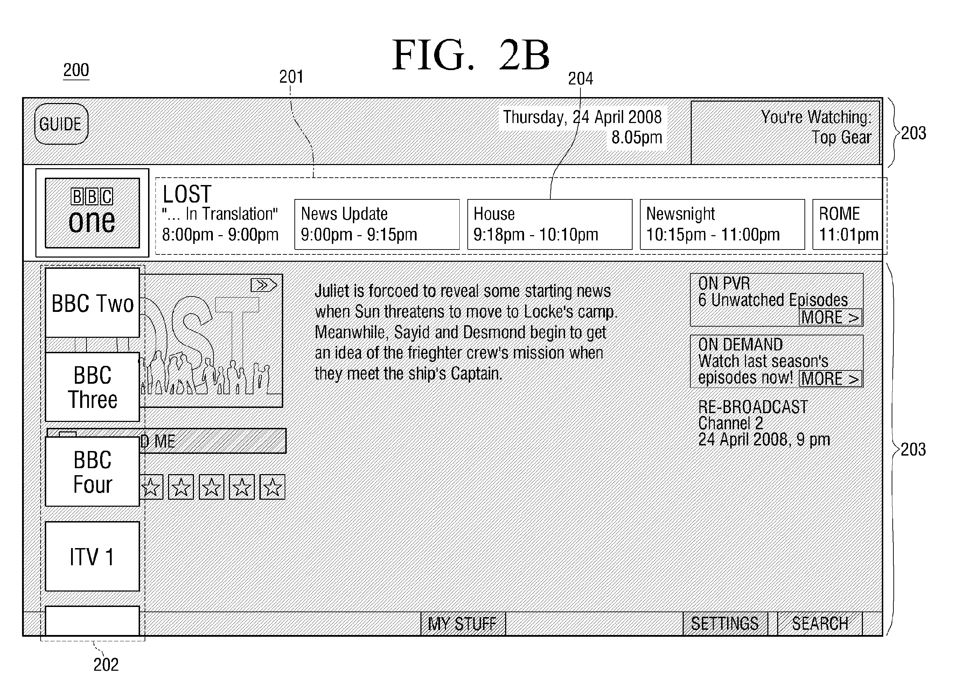

FIGS. 2A and 2B illustrate an example of selecting the channel identifier 101 on the main window 100, and as a response to the selection, displaying a foreground window 200 over at least a portion of the main window 100 according to an exemplary embodiment of the present invention. For example, in FIG. 2A, a user selects the channel identifier 101 from the main window 100. In response to the selection of the channel identifier 101, as shown in FIG. 2B, the foreground window 200 is displayed over at least a portion of the main window 100.

As depicted in FIG. 2B, the foreground window 200 might include a horizontal list which shows information 201 on both the current program on the predetermined channel as well as future programs offered on the predetermined channel. The foreground window 200 might also include a vertical list 202 which shows other channels available for viewing.

As noted above, and as shown in FIG. 2B, the foreground window 200 of the present exemplary embodiment is only displayed over at least a portion of the main window 100. Consequently, portions of the main window 100 remain visible even if the foreground window 200 is being displayed. Further, parts of the foreground window 200 could be translucent so as to maximize the visible portions of the main window 100.

It should be noted that while the exemplary embodiment of FIG. 2B shows a particular location and shape of the foreground window 200 and the horizontal and vertical lists (201 and 202), all of these features could be varied and still be within the scope of the present invention.

While the foreground window 200 is being displayed, the user may select a portion of the screen outside of the foreground window 200 in order to remove the display of the foreground window 200 and return to the display of the main window 100. For example, the user might select any part of an action area 203 shown in FIG. 2B in order to invoke this operation. Again, the location of such an action area can be varied and still be within the scope of the present invention.

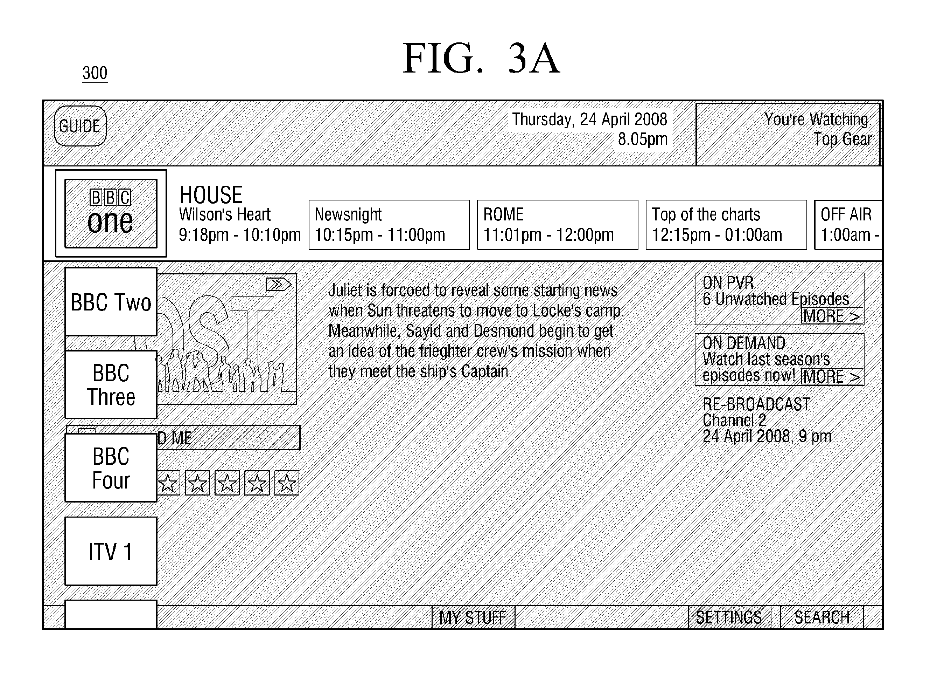

FIG. 3A illustrates selecting a future program from a predetermined channel in the foreground window 200 according to an exemplary embodiment of the present invention. For example, FIG. 2B shows a future program available in the time slot 9:18-10:10 (204). If a user selects the future program 204, the horizontal list 201 is scrolled and updated such that the selected future program 204 is moved to the first position in the horizontal list 201. FIG. 3A shows the updated foreground window 300 which is displayed after the above-noted selection, scrolling and updating.

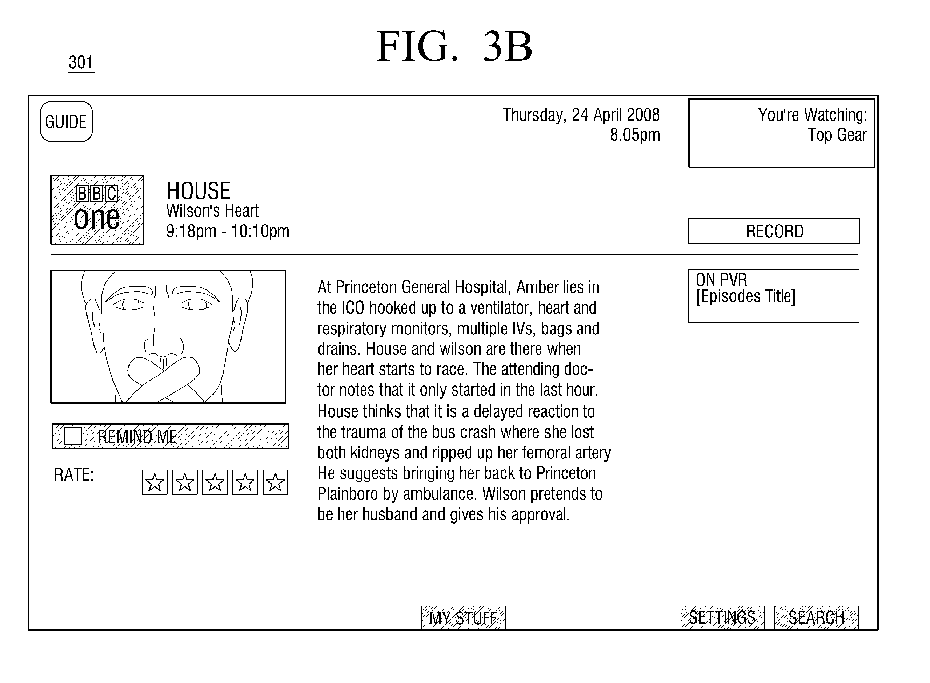

Further, in response to the selection of the future program 204, the main window should also be updated to display the EPG information for the selected future program 204. For example, FIG. 3B illustrates displaying an updated main window 301 which is updated in response to the selection of the future program 204. It should be noted that the updated main window 301may simply be displayed behind the updated foreground window 300, or the updated foreground window 300 may disappear after the above-noted selection, scrolling and updating such that only the updated main window 301 is ultimately displayed.

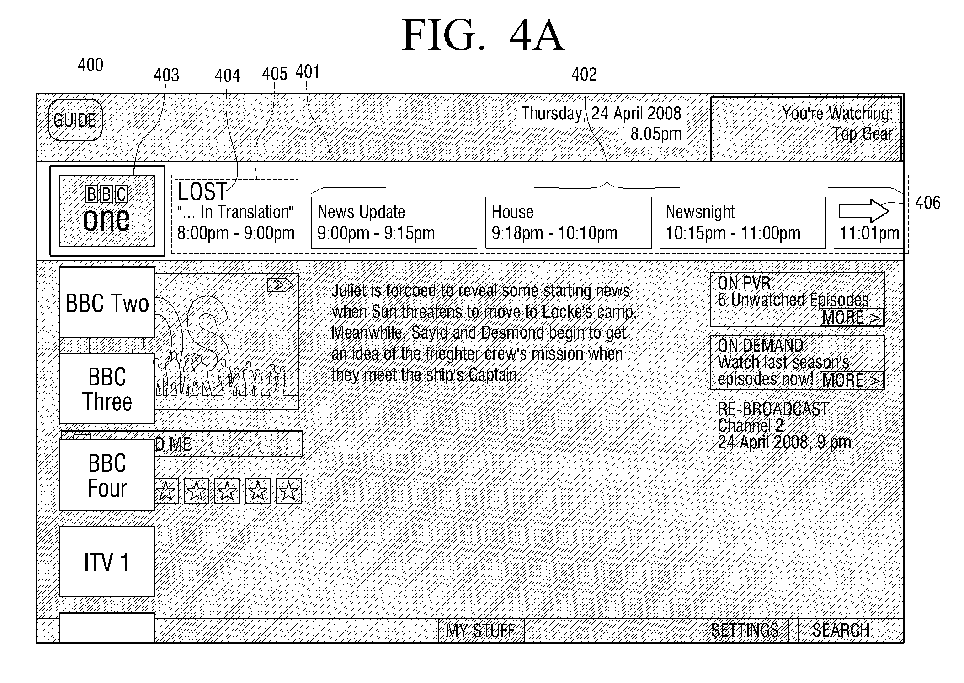

FIG. 4A illustrates scrolling the future programs in the foreground window according to an exemplary embodiment of the present invention. For example, while viewing the foreground window 400, a user can select to scroll the horizontal list 401 1 through future programs 402 on the predetermined channel 403. In the example shown in FIG. 4A, when scrolling begins, the current program 404 is in a first position 405. An arrow 406 indicates the direction of the scrolling as being toward the future programs 402. It should be noted that although the illustrated example shows the direction of the scrolling to be toward the future programs 402, the direction could also be in the opposite direction, i.e., away from the future programs 402.

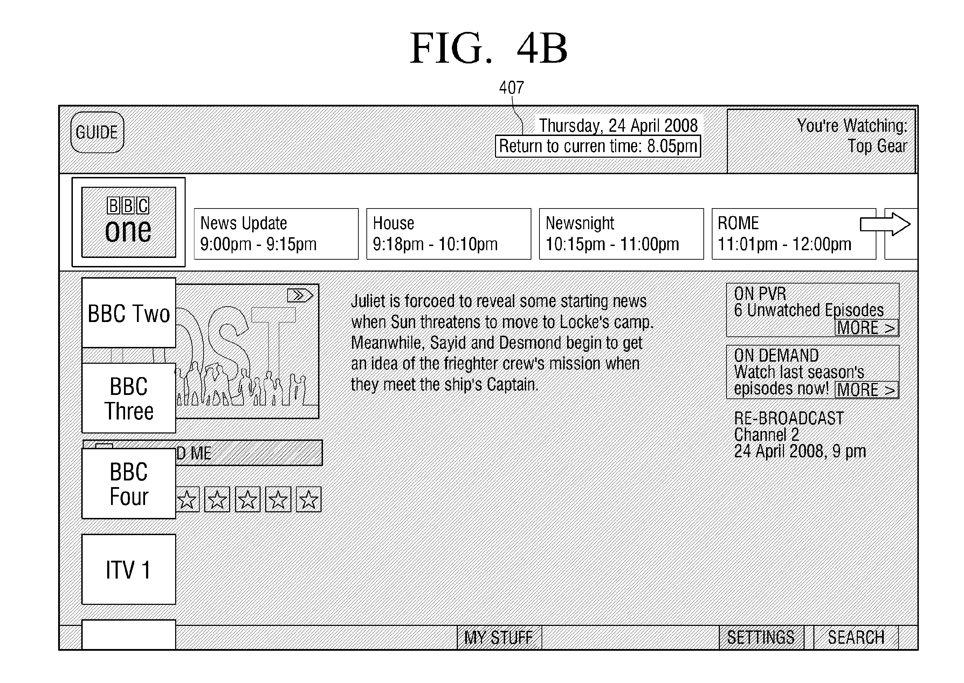

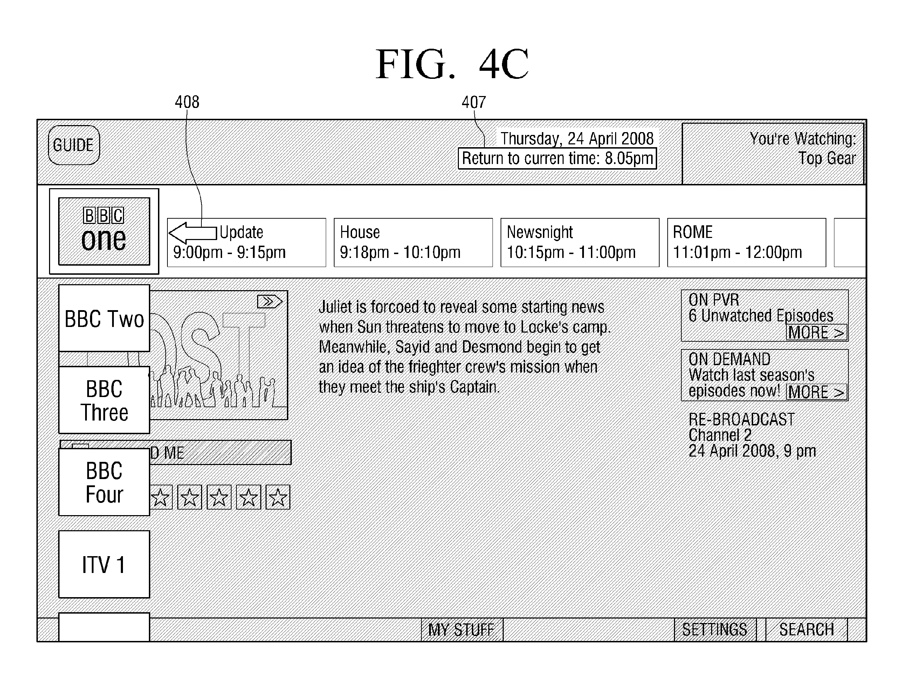

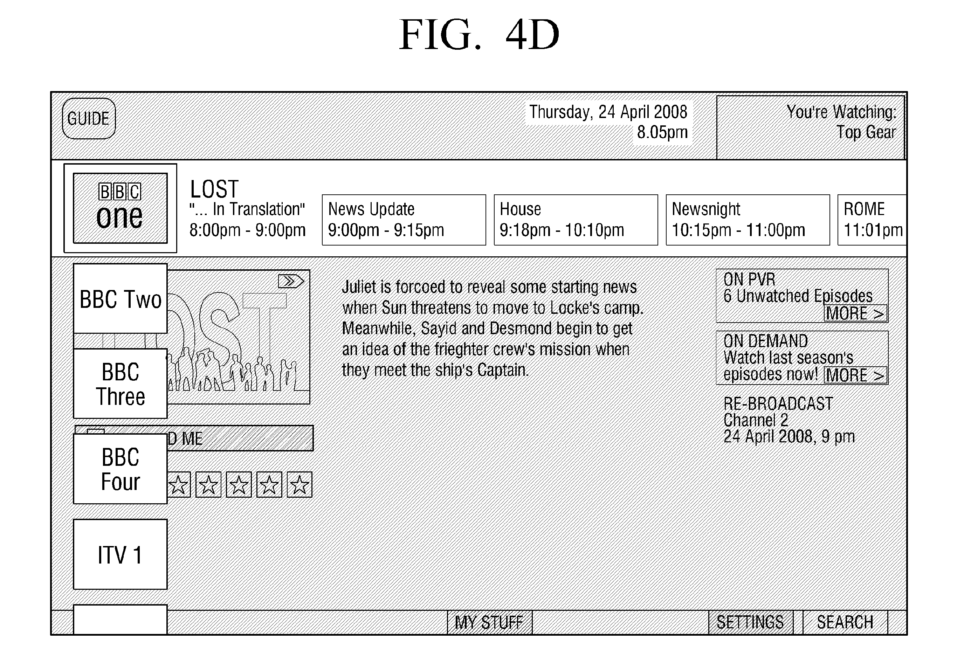

As shown in FIG. 4B, once the scrolling of the horizontal list 401 begins, a "return to current time" icon 407 could be displayed, whereby if the user selects the "return to current time" icon 407 (FIG. 4C), the horizontal list 401 could be made to return to where the current program 404 is again in the first position 405 (FIG. 4D). In the example of FIG. 4C, after the user selects "return to current time" icon 407, the horizontal list 401 begins scrolls back to where the current program 404 is again in the first position 405. The direction of the scrolling is indicated by the arrow in FIG. 4C.

It should be noted that if the current program 404 is no longer being aired, or otherwise no long available, the selection of the "return to current time" icon 407 can function so as to restore whichever program is currently being broadcast on the predetermined channel 403 to be in the first position 405. That is, the selection of the "return to current time" icon 407 can function so as to return the display of the first position 405 to the most current program/time slot (i.e., the program that is closest to the current time).

Further, it should be noted that while the example of FIGS. 4C and 4D shows the user selecting "return to current time" icon 407, and the horizontal list 401 scrolling back to where the current program 404 is again in the first position 405. However, the horizontal list 401 does not necessarily have to scroll back. For example, the horizontal list 401 could snap back at once, or instantaneously restore the current program 404 (or, as noted above, the most current program) into the first position 405.

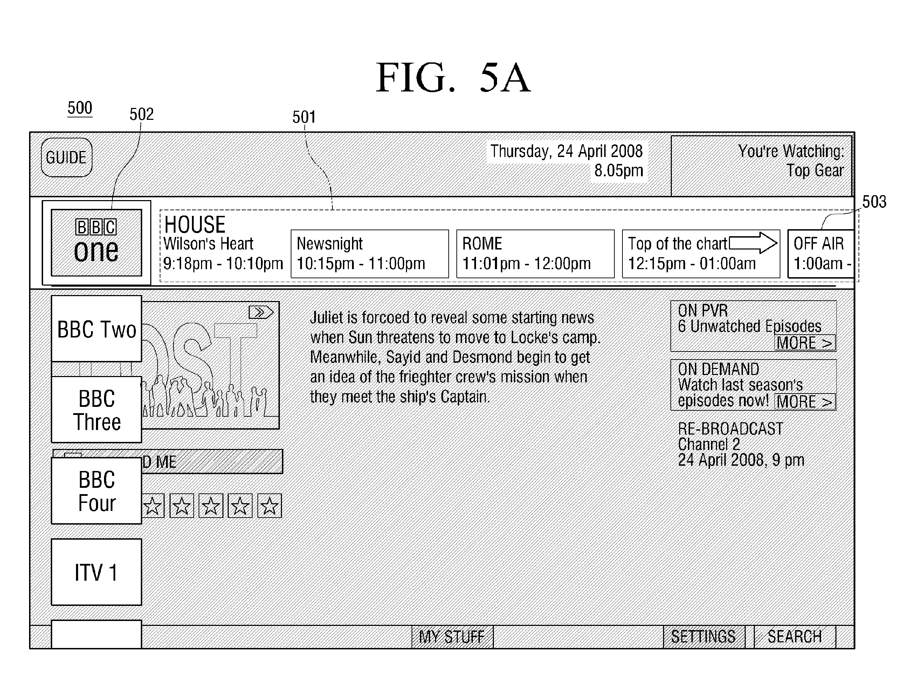

FIG. 5A illustrates scrolling the foreground window 500 to an end of a broadcast schedule for the predetermined channel 502 according to an exemplary embodiment of the present invention. As shown in FIG. 5A, once the scrolling of the horizontal list 501 reaches an end of a broadcast schedule for the predetermined channel 502, the horizontal list 501 displays "OFF AIR" for the unavailable time slot 503 in which no broadcast programming is available.

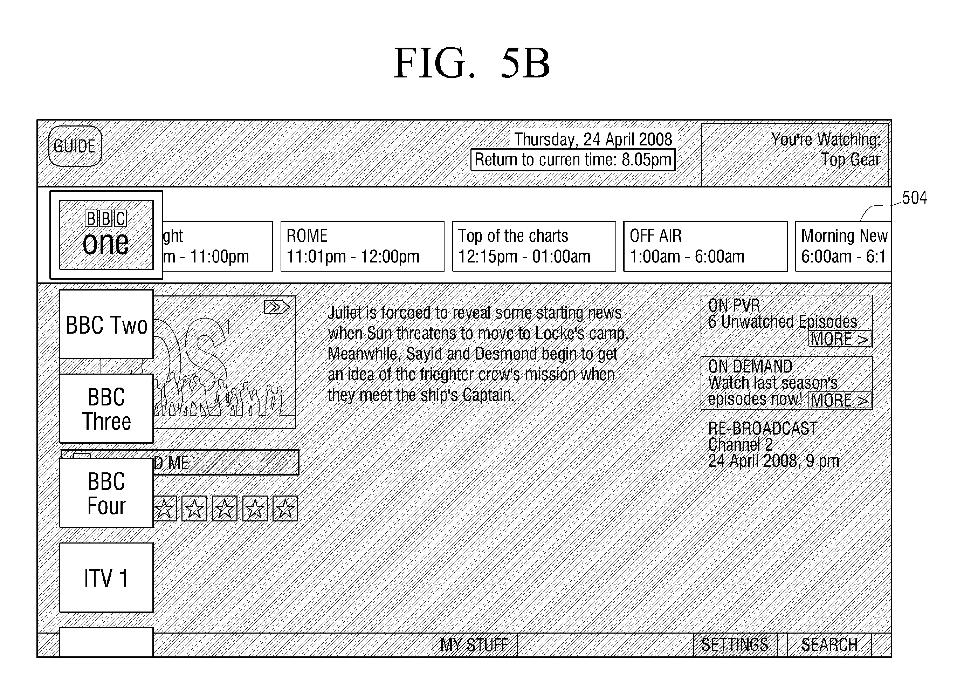

FIG. 5B illustrates displaying available broadcast programming for time slots occurring after any time slots having an unavailable, or "OFF AIR" status according to an exemplary embodiment of the present invention. For example, as scrolling of the horizontal list 501 continues beyond the "OFF AIR" time slot on the predetermined channel 502, the horizontal list 501 shows a new program 504 available after the "OFF AIR" time slot.

It should be noted that while the example in FIGS 5A and 5B shows the unavailable time slot 503 as being "OFF AIR," the unavailable status does not necessarily have to be limited to those situations where the broadcast programming is "OFF AIR." Instead, EPG information for the predetermined channel 502 or time slot might simply be unavailable for display on the horizontal list 501 (i.e., not necessarily "off air").

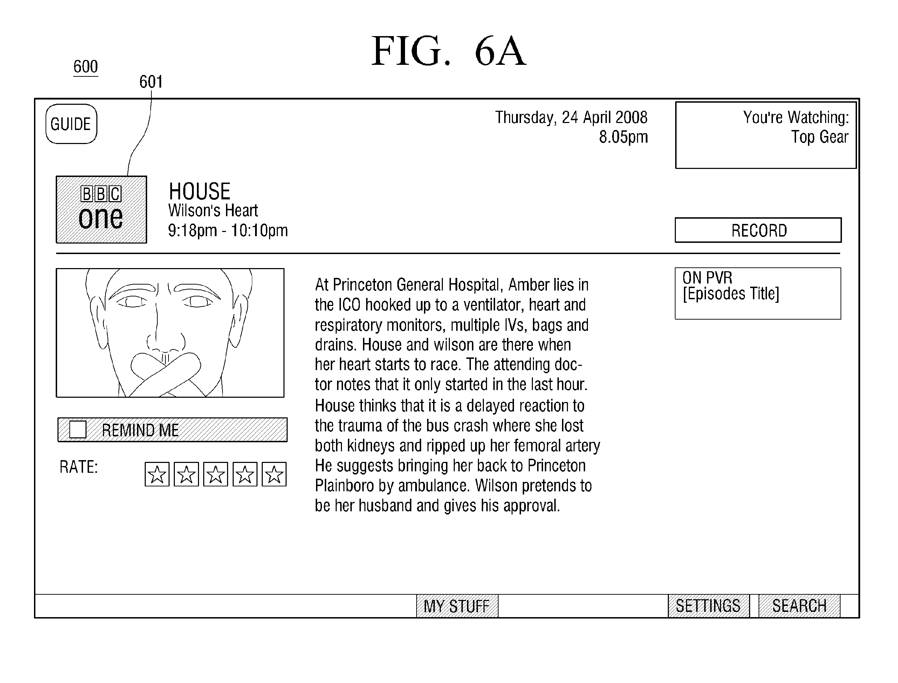

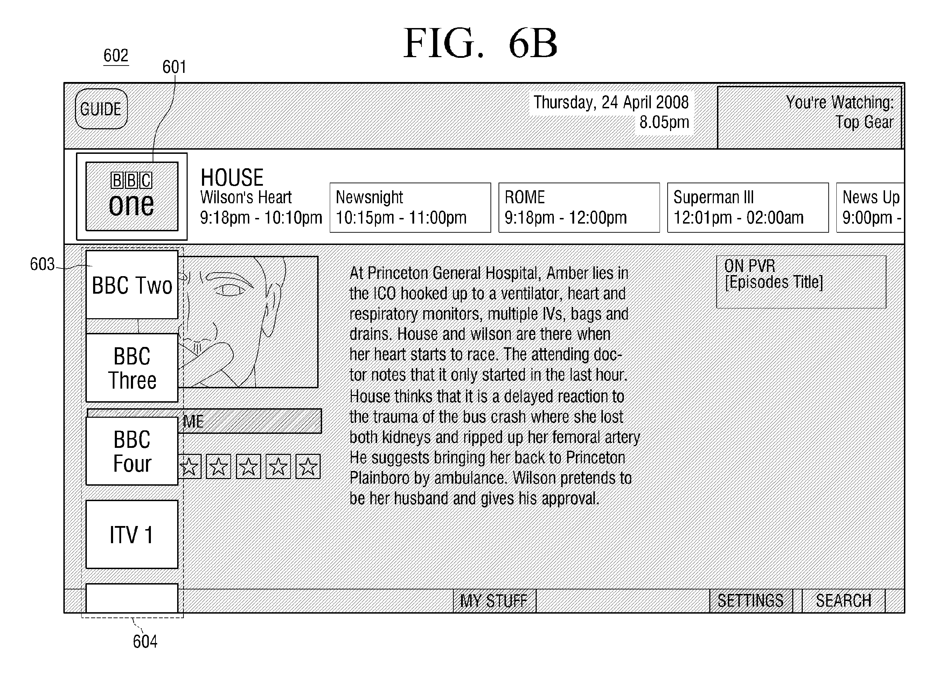

FIG. 6A illustrates selecting the channel identifier 601 from the main window 600 according to an exemplary embodiment of the present invention. As noted above, the selection of the channel identifier 601 may invoke the display of the foreground window 602 shown in FIG. 6B. At this point, if the user selects another channel identifier 603 from the vertical list 604, the vertical list 604 can then be updated to display the programs 605 available on the selected new channel 603.

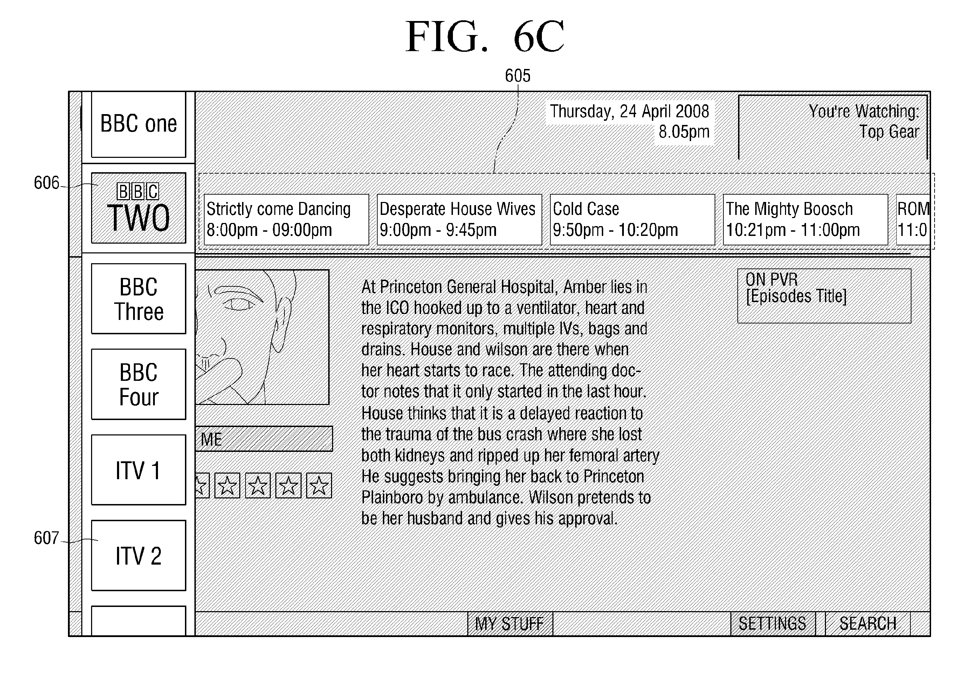

Additionally, as shown in FIG. 6C, the channel identifier 606 for the selected new channel 603 can move up to occupy the position previously occupied by the previous channel identifier 601 from FIG. 6B. Further, the vertical list 604 can be made to scroll upward (e.g., in a cyclic manner) to show additional channels 607 available for user selection.

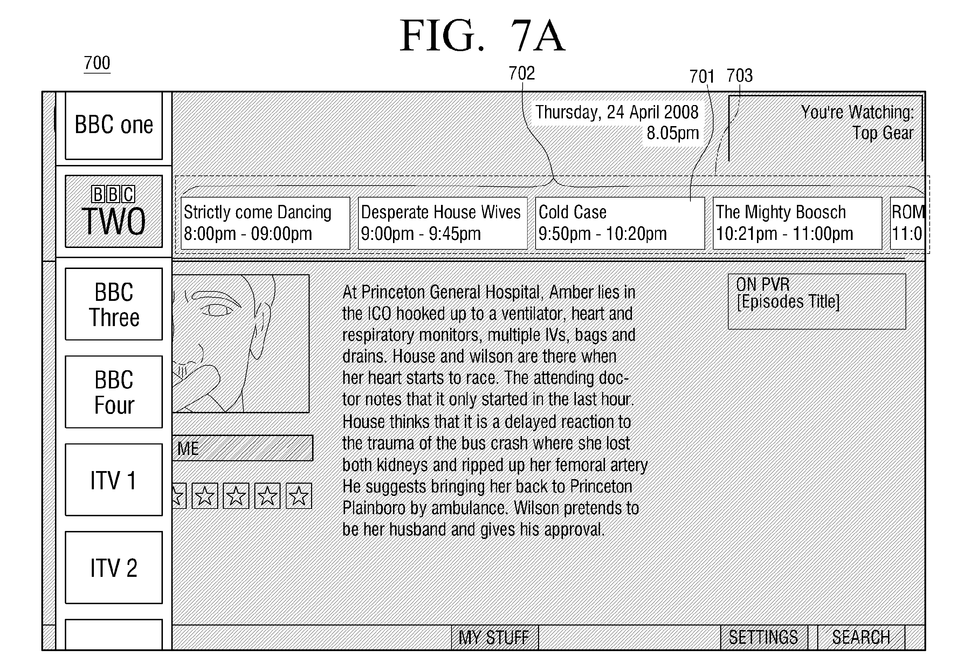

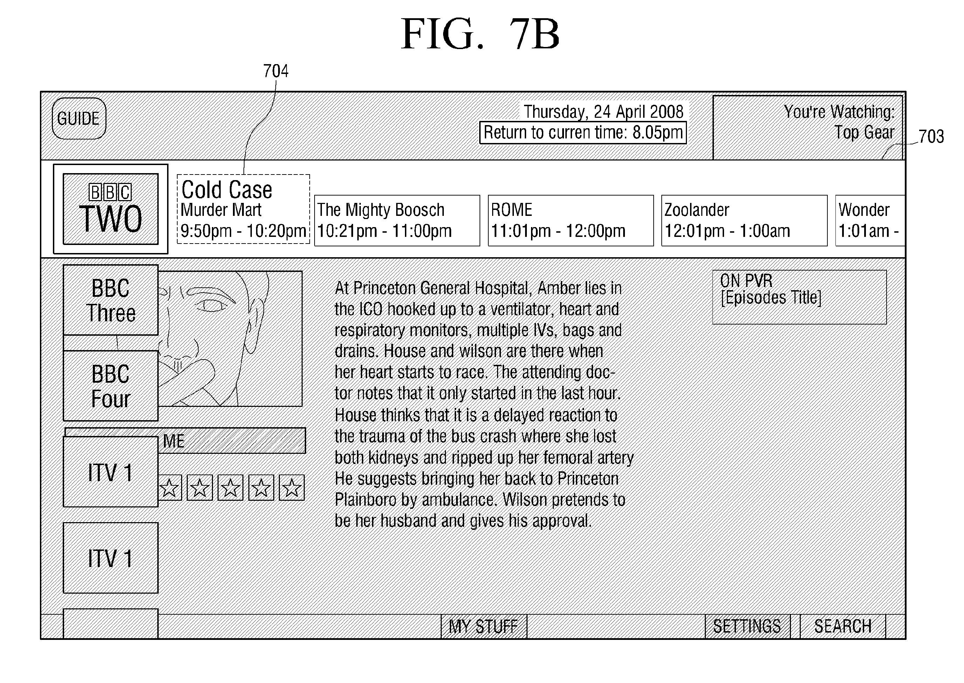

FIG. 7A illustrates selecting a new program 701 from the future programs 702 in the foreground window 700 according to an exemplary embodiment of the present invention. As shown in FIG. 7B, once the user selects the new program 701, the future programs 702 in the horizontal list 703 can be rotated so as to move the selected new program 701 into the first position 704 of the horizontal list 703.

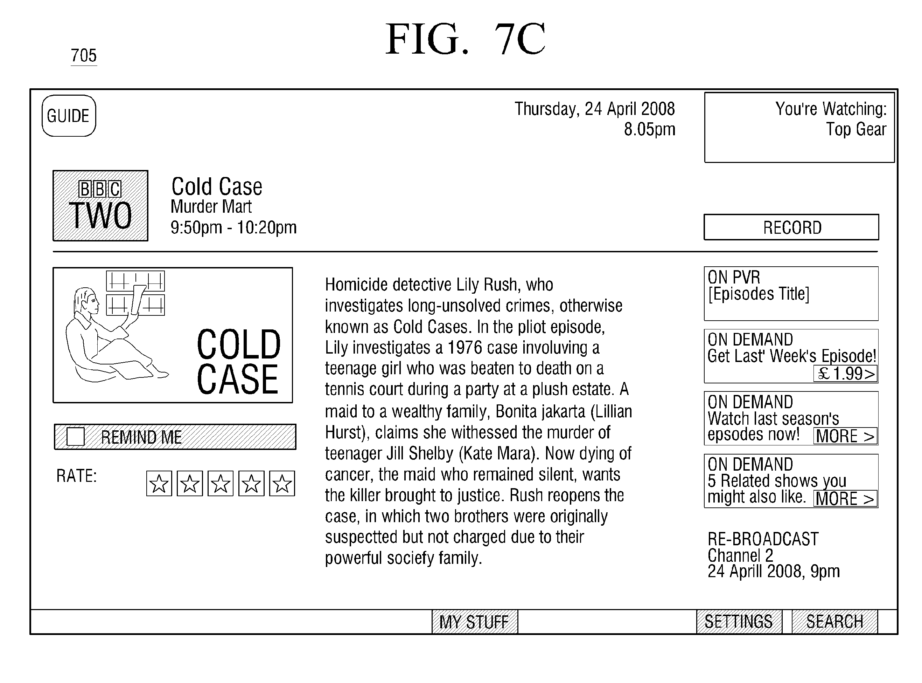

As described in the examples above, in response to the selection of the new program 701, the main window can also be updated to display the EPG information for the selected new program 701. FIG. 7C illustrates displaying an updated main window 705 which is updated in response to the selection of the new program 701. It should be noted that the updated main window 301may simply be displayed behind the updated foreground window 300, or the updated foreground window 300 may disappear after the above-noted selection, scrolling and updating such that only the updated main window 301 is ultimately displayed.

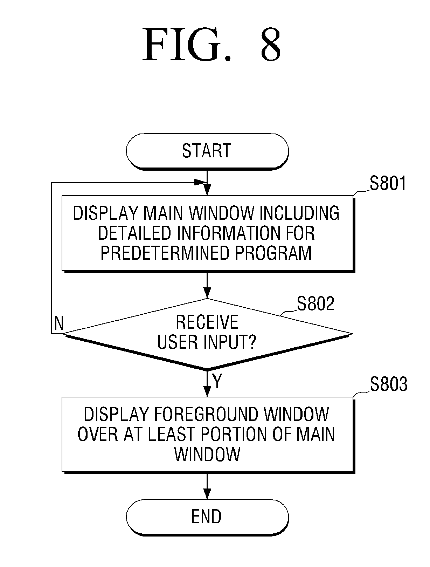

FIG. 8 illustrates a basic flowchart according to an exemplary embodiment of the present invention. In operation S801, the main window is displayed including detailed information for a predetermined program. Next, at operation S802, a determination is made as to whether a specific user input has been received. If the specific user input has not been received (S802-N), the operation repeats S801 by continuing to display the main window. However, if the specific user input has been received (S802-Y), the a foreground window is displayed in operation S803, in response to the received user input, over at least a portion of the main window, such that the foreground window includes a first list including program information for a current program on a predetermined channel and future programs on the predetermined channel and a second list including channel information for other channels in the plurality of channels.

The foregoing exemplary embodiments are merely exemplary and are not to be construed as limiting the present invention. The present teaching can be readily applied to other types of methods and apparatuses. Also, the description of the exemplary embodiments of the present invention is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying electronic program guide (EPG) content for a plurality of channels, the method comprising:
displaying (S801) a main window, wherein the main window includes detailed information for a predetermined program;
receiving (S802) a user input; and
displaying (S803) a foreground window, in response to the user input, over at least a portion of the main window, wherein the foreground window includes a first list including program information for a current program on a predetermined channel and future programs on the predetermined channel and a second list including channel information for other channels in the plurality of channels.

2. The method according to claim 1, wherein the EPG content includes a plurality of channel identifiers for each channel in the plurality of channels.

3. The method according to claim 2, wherein the foreground window includes a first channel identifier, which corresponds to the predetermined channel, and wherein the channel information for the other channels in the second list includes channel identifiers for each of the other channels in the plurality of channels.

4. The method according to claim 2, wherein the main window further includes a channel identifier, from the plurality of channel identifiers, for a channel which is broadcasting the predetermined program,
wherein the user input includes one of a selection of the channel identifier in the main window, a selection of an action area displayed on a portion of the main window and a command received from a remote control,

5. The method according to any one of claims 1 to 4, wherein the predetermined program is broadcast on the predetermined channel.

6. The method according to claim 3 further comprising:
selecting a second channel identifier from the other channels in the second list, wherein the second channel identifier corresponds to a desired channel;
scrolling the second list so that the selected second channel identifier moves to a position occupied by the first channel identifier; and
updating the first list to include updated program information for programs on the desired channel,
selecting a new program from the updated first list;
scrolling the updated first list so that the selected new program becomes the current program;
updating the detailed information displayed in the main window so that the updated detailed information corresponds to the selected new program; and
terminating the displaying (S803) of the foreground window after the updating of the detailed information displayed in the main window.

7. The method according to any one of claims 1 to 6, further comprising:
selecting a portion of the main window other than the at least one portion where the foreground window is displayed; and
terminating the displaying (S803) of the foreground window.

8. The method according to any one of claims 1 to 7, further comprising:
selecting a future program of the future programs displayed in the first list;
scrolling the first list so that the selected future program becomes the current program;
updating the program information in the first list; and
displaying updated detailed information about the selected future program in the foreground window.

9. The method according to any one of claims 1 to 8, wherein the first and second lists are scrollable,and at least one of the first list and the second list is translucent,
wherein the detailed information for the predetermined program is visible if the first list is displayed,
wherein the first list includes unit cells for each of the future programs, and the unit cells are equal in size,
wherein the second list includes unit cells for each of the other channels in the plurality of channels, and the unit cells are equal in size.

10. The method according to claim 9, wherein each cell includes time information for the respective future programs,
wherein if the predetermined channel is not broadcasting during a time slot, the respective unit cell for the time slot displays an indicator which indicates an unavailable status.

11. The method according to any one of claims 1 to 10, further comprising:
selecting one of playing, pausing and recording of the current program on the predetermined channel;
performing the one of the playing, pausing and recording the current program; and
displaying an indicator which indicates the selected one of the playing, pausing and recording of the current program.

12. The method according to any one of claims 1 to 11, further comprising:
selecting to perform recording of a future program on the predetermined channel;
performing the recording of the future program; and
displaying an indicator which indicates the recording of the future program.

13. The method according to any one of claims 1 to 12, further comprising:
scrolling the first list from the current program in a direction selected by a user wherein the current program is originally in a first position; and
displaying a return to current program icon,
wherein if the direction selected by the user is away from the future programs, the first list is scrolled such that each future program is sequentially moved into and then out of the first position, in order of increasing time slots, while the user continues the scrolling, and
wherein if the direction selected by the user is toward the future programs, the first list is scrolled such that each program is sequentially moved into and then out of the first position, in order of decreasing time slots, while the user continues the scrolling or until the current program is again in the first position.

14. The method according to claim 13, further comprising: selecting the return to current program icon,
wherein if a time slot of the current program has not expired, updating the first list such that the current program is returned to the first position, and
wherein if the time slot of the current program has expired, updating the first list such that a new current program is moved to the first position, wherein the new current program is a program which is currently being broadcast on the predetermined channel,
wherein the displaying of the return to current program icon increases in intensity as the scrolling of the first list causes the current program to move further away from the original position, and
wherein the displaying of the return to current program icon decreases in intensity as the scrolling of the first list causes the current program to move closer to the original position.

15. The method according to any one of claims 1 to 14, further comprising:
providing a rating indicator for the predetermined program on the main window;
receiving an input corresponding to a desired rating;
updating the rating indicator based on the received input according to the desired rating; and
displaying the updated rating indicator.

## Amended claims

### Amended claims in accordance with Rule 137(2) EPC.

**1.** A method of displaying electronic program guide (EPG) content for a plurality of channels, the method comprising:
displaying (S801) a main EPG window, wherein the main window includes EPG information for a predetermined program;
receiving (S802) a user input; and
displaying (S803) a foreground window, in response to the user input, over at least a portion of the main window, wherein the foreground window includes a first list including program event information for a current program on a predetermined channel and future programs on the predetermined channel and a second list including channel service information for other channels in the plurality of channels.

**2.** The method according to claim 1, wherein the EPG content includes a plurality of channel identifiers for each channel in the plurality of channels.

**3.** The method according to claim 2, wherein the foreground window includes a first channel identifier, which corresponds to the predetermined channel, and wherein the channel service information for the other channels in the second list includes channel identifiers for each of the other channels in the plurality of channels.

**4.** The method according to claim 2, wherein the main window further includes a channel identifier, from the plurality of channel identifiers, for a channel which is broadcasting the predetermined program,
wherein the user input includes one of a selection of the channel identifier in the main window, a selection of an action area displayed on a portion of the main window and a command received from a remote control.

**5.** The method according to any one of claims 1 to 4, wherein the predetermined program is broadcast on the predetermined channel.

**6.** The method according to claim 3 further comprising:
selecting a second channel identifier from the other channels in the second list, wherein the second channel identifier corresponds to a desired channel;
scrolling the second list so that the selected second channel identifier moves to a position occupied by the first channel identifier; and
updating the first list to include updated program event information for programs on the desired channel,
selecting a new program from the updated first list;
scrolling the updated first list so that the selected new program becomes the current program;
updating the EPG information displayed in the main window so that the updated EPG information corresponds to the selected new program; and
terminating the displaying (S803) of the foreground window after the updating of the EPG information displayed in the main window.

**7.** The method according to any one of claims 1 to 6, further comprising:
selecting a portion of the main window other than the at least one portion where the foreground window is displayed; and
terminating the displaying (S803) of the foreground window.

**8.** The method according to any one of claims 1 to 7, further comprising:
selecting a future program of the future programs displayed in the first list;
scrolling the first list so that the selected future program becomes the current program;
updating the program event information in the first list; and
displaying updated information about the selected future program in the foreground window.

**9.** The method according to any one of claims 1 to 8, wherein the first and second lists are scrollable, and at least one of the first list and the second list is translucent,
wherein the EPG information for the predetermined program is visible if the first list is displayed,
wherein the first list includes unit cells for each of the future programs, and the unit cells are equal in size,
wherein the second list includes unit cells for each of the other channels in the plurality of channels, and the unit cells are equal in size.

**10.** The method according to claim 9, wherein each cell includes time information for the respective future programs,
wherein if the predetermined channel is not broadcasting during a time slot, the respective unit cell for the time slot displays an indicator which indicates an unavailable status.

**11.** The method according to any one of claims 1 to 10, further comprising:
selecting one of playing, pausing and recording of the current program on the predetermined channel;
performing the one of the playing, pausing and recording the current program; and
displaying an indicator which indicates the selected one of the playing, pausing and recording of the current program.

**12.** The method according to any one of claims 1 to 11, further comprising:
selecting to perform recording of a future program on the predetermined channel;
performing the recording of the future program; and
displaying an indicator which indicates the recording of the future program.

**13.** The method according to any one of claims 1 to 12, further comprising:
scrolling the first list from the current program in a direction selected by a user wherein the current program is originally in a first position; and
displaying a return to current program icon,
wherein if the direction selected by the user is away from the future programs, the first list is scrolled such that each future program is sequentially moved into and then out of the first position, in order of increasing time slots, while the user continues the scrolling, and
wherein if the direction selected by the user is toward the future programs, the first list is scrolled such that each program is sequentially moved into and then out of the first position, in order of decreasing time slots, while the user continues the scrolling or until the current program is again in the first position.

**14.** The method according to claim 13, further comprising: selecting the return to current program icon,
wherein if a time slot of the current program has not expired, updating the first list such that the current program is returned to the first position, and
wherein if the time slot of the current program has expired, updating the first list such that a new current program is moved to the first position, wherein the new current program is a program which is currently being broadcast on the predetermined channel,
wherein the displaying of the return to current program icon increases in intensity as the scrolling of the first list causes the current program to move further away from the original position, and
wherein the displaying of the return to current program icon decreases in intensity as the scrolling of the first list causes the current program to move closer to the original position.

**15.** The method according to any one of claims 1 to 14, further comprising:
providing a rating indicator for the predetermined program on the main window;
receiving an input corresponding to a desired rating;
updating the rating indicator based on the received input according to the desired rating; and
displaying the updated rating indicator.
